# EUROPÄISCHE PATENTSCHRIFT

(11) **EP 0 867 655 B1**
(45) Veröffentlichungstag und Bekanntmachung des Hinweises auf die Patenterteilung: **05.11.2003**
(21) Anmeldenummer: 98200937.5
(22) Anmeldetag: 26.03.1998
(51) Int. Cl.: F16M 11/14

(54) **Universalkugelverstellkonstruktion**
Universal ball joint
Dispositif d'orientation universelle à rotule

(30) Priorität: 26.03.1997 NL 1005643
(43) Veröffentlichungstag der Anmeldung: 30.09.1998
(73) Patentinhaber: Audipack Verkoop B.V., 2751 GT Moerkapelle (NL)
(72) Erfinder: Van den Berg, Julian Robert, 2751 Moerkapelle (NL)
(74) Vertreter: Merkelbach, B.

(56) Entgegenhaltungen:
- FR-A- 920 230
- GB-A- 925 860
- NL-C- 1 005 643
- US-A- 1 455 441
- US-A- 5 664 750

## Beschreibung

Die Erfindung bezieht sich auf eine Universalkugelverstellkonstruktion zur Anwendung bei der Montage von u.m. Projektoren oder derartige Apparate an der Wand und/oder Decke, welche besteht aus der Kombination von einem an der Wand und/oder an der Decke zu befestigenden flache Tragplatte welche zentraler versehen ist mit einem aus der Fläche des Tragplattes auf stehenden rohrförmigen Halter sowie mit einer aus zwei separaten länglichen Schalen bestehende Kugelverriegelung und einem Kugelkopf besteht, wobei mit Hilfe eines Verriegelungselements ein klemmdruck zwischen den beiden Schalen derart aufgebracht werden kann dass der Kugelkopf der vollständig innerhalb der Kugelförmigen Aussparung der Schalen eingeschlossen und in einer vorher eingestellten Position fixiert werden kann.

Eine Kugelverstelkonstruktion ist z. B. bekannt aus der französischen Patentschrift 920230. In dieser Patentschrift ist eine Kugelgelenkkonstruktion einer Lampe beschrieben wobei für das Erreichen von einem Justierwinkel zumindest zwei mit einander verbundenen Kugelköpfe notwendig sind. Infolge sind vier separaten länglichen Schafen angewendet und ist jede Schale am vom Kugelkopf abgewandte Ende von Schraubegewinde vorgesehen. Die Klemmung zwischen Kugelkopf und Schalen wird erreicht durch ein auch von Gewinde vorgesehenen Verriegelungselement über die Schalenenden zu schrauben.

Die Erfindung dagegen bezieht sich auf eine Universalkugelverstellkonstruktion zur Montage von z.B. Projektoren in Tagungsräumen und dergleichen Räume, wobei nicht nur Massnahmen getroffen werden für eine sichere Aufhängung davon, aber sollen die Projektoren auch noch auf einer bestimmten Höhe und/oder unter einer gewünschten Winkelposition fixiert werden. In Zusammenhang mit der meist hohen Position der Apparate wie Projektoren ist eine gewährleistete schnelle und einfache Aufstellung gewünscht. Die Erfindung beschafft eine wirksame Universalkugelverstellkonstruktion welche unter Anwendung einfacher Mittel gut zu fixieren und einzustellen ist.

Dazu hat das vom Kugelkopf abgewandte Ende jeder Schale über eine höhe die kleiner ist als oder gleich ist an der Höhe des rohrförmigen Halters, einen Aussendurchmesser welche hauptsächlich passend übereinstimmt mit dem inneren Durchmesser des rohrförmigen Halters, derart dass beide Schalen, versehen mit dem dazwischen montierten Kugelkopf, mit dem genannten Ende in den rohrförmigen Halter eingesetzt werden können mit dem Hilfe von mindestens einem Verriegelungselement darin verriegelt werden und die beide Schalen etwa auf der Hälfte zwischen dem Ende des Halters und der Aussparung für den Kugelkopf versehen sind mit Mittel womit, mit Hilfe eines zweiten Verriegelungselement einen zusätzlichen gegenseitigen Klemmdruck zwischen Beiden zustande gebracht werden kann, derart dass eine vollständige Aufschliessung des Kugelkopfes innerhalb der Kugelförmigen Aussparung realisiert wird sowie auch die vorher fixierte Position davon.

Diese und andere Vorteile der Erfindung werden hierunter mit Hilfe der Zeichnungen und den Patentansprüchen an Hand eines Ausführungsbeispiels näher erläutert.
Fig. 1 zeigt eine perspektivische Ansicht der Aufstellung einer erfindungsgemässen Universalkugelverstellkonstruktion welche an einer Tragplatte montiert ist;
Fig. 2 zeigt beide Schalen der Kugelverstellkonstruktion gegenüber einander wobei der Kugelkopf nicht eingeklemmt ist;
Fig. 3 zeigt eine perspektivische Ansicht beider Schalen sowie auch den auf seiner abgeplatteten Seite liegenden einzuschliessenden Kugelkopf; und
Fig. 4 zeigt die Tragplatte mit dem rohrförmigen Halter für die Schalen.

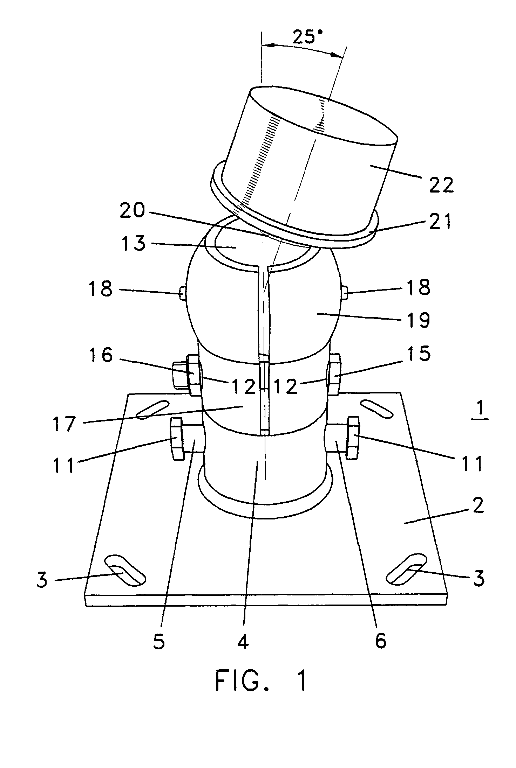

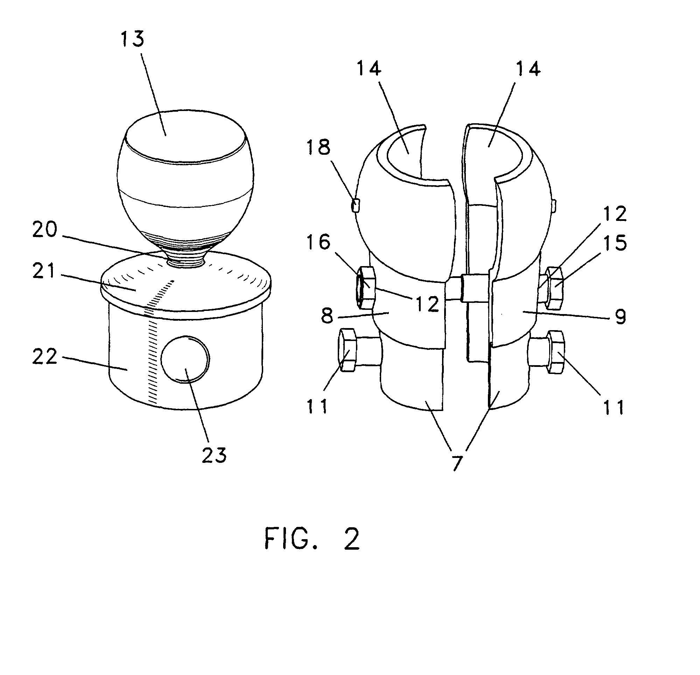

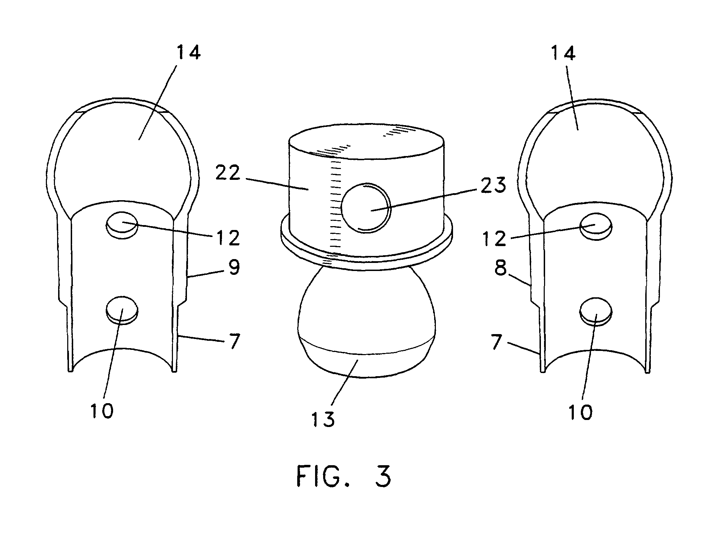

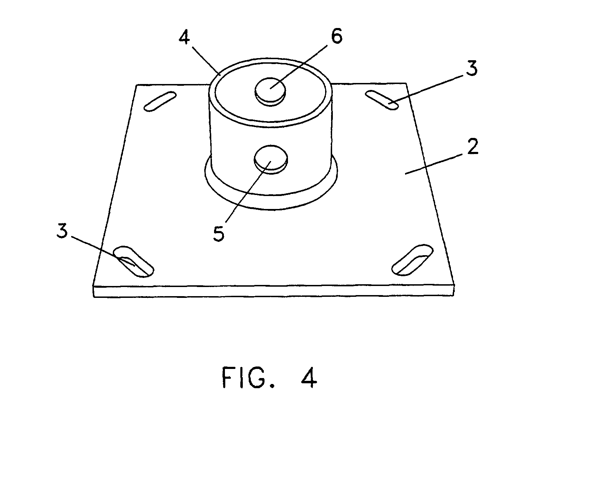

In Fig. 1 wird die Aufstellung der Universalkugelverstellkonstruktion 1 gezeigt welche aufgebaut ist aus der Tragplatte 2, versehen mit schlitzförmigen Öffnungen 3 zur Befestigung der Konstruktion in umgekehrter Position an der Decke. Senkrecht auf der Tragplatte 2 ist in der Mitte ein zylindrischer Halter 4, siehe Fig. 4, geschweisst, welche versehen ist mit zwei diametral positionierten Bolzenlöcher 5, 6. Zwei gegeneinander liegenden unteren Teile 7 der nahezu identisch ausgeführten Schalen 8 und 9, Fig. 2 und 3, passen genau in dem zylindrischen Halter 4 auf der Tragplatte 2 und jede Schale 8, 9 ist versehen mit einer Bolzengewindeloch 10 damit mit Hilfe von Bolzen 11 jede Schale 8, 9 daran montiert werden kann nachdem es in dem Halter 4 eingesetzt worden ist. Diese Montage findet statt nachdem den Kugelkopf 13 innerhalb der hohlen kugelrunden Aussparung 14 und dem anderen Ende der Schale 8, 9 montiert worden ist und die tatsächliche Einklemmung der Kugelkopf 13 findet statt mit dem gleichzeitigen Andrehen des langen Bolzens 15 mit dem Mutter 16 der dann durch das Loch 12 hingeführt wird, siehe Fig. 2. Die innere kugelrunde Aussparung 14 ist derart ausgeführt dass der Kugelkopf 13 sich nicht aus beiden Schalen 8, 9 los werden kann wenn die Schalen sich innerhalb des Halters 4 befinden. In der gezeigten Ausführung geht der Aussenwand des zylindrischen Halters 4 anschliessend über in dem ebenfalls zylindrischen Mittelteil 17 der Schale 8, 9. Bei der Montage des Kugelkopfes 13 in die richtige Position ist es möglich Bitschrauben 18 zu benutzen welche durch eine Schraubengewindeöffnung in der Mitte der kugelförmigen Aussparung hin steckt und wovon während der Vormontage die Bolzenspitzen die vorab gewünschte Position des Kugelkopfes 13 fixieren können. Durch weiteres Andrehen des Bolzen 15 mit der Mutter 16 wird schliesslich die gewünschte Position des Kugelkopfes 13 definitiv fixiert. Es ist klar dass zwischen beide Schalen 8, 9 in montierter Position immer eine Spalte 19 offen bleibt damit der Kugelkopf 13 unter hoher Druckausübung über den Bolzen 15 und Mutter 16 von beiden innere kugelförmigen Aussparungen 14 festgehalten wird. Die Schalen 8 und 9 können z.B. einstückig auf einer Drehbank hergestellt werden und weiterhin in Längsrichtung in gleichen Hälften geteilt werden, derart dass bei Montage des Kugelkopfes 13 die vorher genannte Spalte 19 entsteht, siehe Fig. 1. In derselben Fig. 1 befinden sich die Verriegelungselemente, das heisst die Bolzen 11, 12, noch nicht in der vollständig festgedrehten Klemmposition.

Der Kugelkopf 13 geht über eine Verjüngung 20 über in einen herausragenden Kragen 21 und weiter in einen zylindrischen Teil 22. Dieser Teil besitzt eine diametrale Bolzenloch 23. Über diesen zylindrischen Teil 22 kann ein Rohr aufgeschoben werden das z.B. mit Hilfe von einem oder mehreren Bitschrauben am Kugelkopf fixiert werden. Das Ende dieses Rohres kann üblicherweise versehen sein mit einem an sich bekannten Tragelement für einen Projektor. Die Freiheit womit der Kugelkopf 13 drehbar und verstellbar ist, mit Bezug auf der Verriegelung von den einzuklemmenden Schalen 8 und 9, begrenzt von z.B. eine Keiloberfläche mit einem Scheitelwinkel von 25°. Der Aussendurchmesser des Kragens 21 stimmt vorzüglich überein mit dem Aussendurchmesser des zu benutzenden Rohres damit auch dort, sowie bei der Einklemmung für den Halter 4, eine glatte Ansicht entsteht. Bei der Benutzung von Bitschrauben für alle Verriegelungselemente statt die in Fig. 1 gezeichneten herausragenden Bolzen 11, 12, 15, 16 kann die Ansicht weiter verschönert werden.

Bei Herstellung des Kugelkopfes 13 aus zylindrischem Stabmaterial braucht man keine Kugel zu drehen sondern kan die obere Seite des Kugelkopfes 13 abgeflacht werden, wodurch sich eine Materialeinsparung und eine Bearbeitungseinsparung ergibt. Es wird ja eine schnelle Bearbeitung einer flachen Ebene möglich wo vorher eine kugelrunde Abdrehung realisiert werden sollte. Auch wird der Vorteil erreicht dass bei Montage an der Wand und/oder an der Decke die Aufhängung einerseits schnell realisiert wird und doch andererseits auch noch die Bewegungsfreiheit der Bestandteile der Universalkugelverstellkonstruktion gewährleistet wird ohne das Risiko das ein bewegliches Teil wie der Kugelkopf 13 während der Montage herunter fällt und Schaden verursacht.

## Patentansprüche

1. Universalkugelverstellkonstruktion zur Anwendung bei der Montage von Projektoren oder derartigen Apparaten an der Wand und/oder Decke, welche besteht aus der Kombination von einer an der Wand und/oder an der Decke zu befestigenden flachen Tragplatte (2), welche zentral versehen ist mit einem aus der Fläche der Tragplatte (2) abstehenden rohrförmigen Halter (4) sowie mit einer aus zwei separaten länglichen Schalen (8, 9) bestehenden Kugelverriegelung und einem Kugelkopf, wobei mit Hilfe eines Verriegelungselements (15, 16) ein Klemmdruck zwischen den beiden Schalen derart aufgebracht werden kann, dass der Kugelkopf vollständig innerhalb der kugelförmigen Aussparung der Schalen eingeschlossen und in einer vorher eingestellten Position fixiert werden kann, **dadurch gekennzeichnet, dass** das vom Kugelkopf abgewandte Ende (7) jeder Schale (8, 9) über eine Höhe, die kleiner ist als oder gleich ist wie die Höhe des rohrförmigen Halters (4), einen Aussendurchmesser besitzt, welcher passend übereinstimmt mit dem inneren Durchmesser des rohrförmigen Halters (4), derart, dass beide Schalen (8, 9), versehen mit dem dazwischen montierten Kugelkopf (13), mit dem genannten Ende (7) in den rohrförmigen Halter (4) eingesetzt und mit Hilfe von mindestens einem zweiten Verriegelungselement (11, 12) dann verriegelt werden können, wobei die beiden Schalen (8, 9) etwa auf der Hälfte zwischen dem Ende des Halters (4) und der Aussparung (14) für den Kugelkopf (13) versehen sind mit dem ersten Verriegelungselement (15, 16), mit dem ein zusätzlicher gegenseitiger Klemmdruck zwischen den beiden Schalen (8, 9) zustande gebracht werden kann, derart, dass eine vollständige Einschliessung des Kugelkopfes (13) innerhalb der kugelförmigen Aussparung (14) realisiert wird sowie auch dessen vorher fixierte Position.

2. Universalkugelverstellkonstruktion gemäss Anspruch 1, **dadurch gekennzeichnet, dass** der Kugelkopf (13) hergestellt ist aus zylindrischem Stabmaterial und der Kugelkopf (13) abgeflacht ist bis etwa ein Drittel seiner Höhe in Anschluss an einen zylindrischen Teil (22) mit herausragendem Kragen (21).

3. Universalkugelverstellkonstruktion gemäss Anspruch 2, **dadurch gekennzeichnet, dass** der zylindrische Teil (22) eine Bolzenverbindung (23) mit einem über den zylindrischen Teil (22) geschobenes Element z. B. das Rohr eines Projektorhalters, verwirklichen kann und der Kragen (21) eine Begrenzung dieses Elements bildet.

4. Schale, insbesondere eine hohle Schale (8,9) zur Anwendung in einer Universalkugelverstellkonstruktion gemäss einer der vorhergehenden Ansprüche, **dadurch gekennzeichnet, dass** ein rohrförmiges Mittelteil in einseitiger Richtung versehen ist von einem Endteil (7) dessen Aussendurchmesser übereinstimmt mit dem Innendurchmesser eines rohrförmigen Halters (4) welche insbesondere rechtwinkelig auf einer Tragplatte (2) geschweisst ist, derart dass der rohrförmige Halter (4) und das Mittelteil in gleichem Durchmesser auf einander anschliessen weil die Schale (8,9) zur anderen Seite übergeht in einer hohlen kugelförmigen Aussparung (14) welche innenseitig dieselbe Form besitzt als der Durchmesser eines Kugelkopfes (13).

5. Schale gemäss Anspruch 4, **dadurch gekennzeichnet, dass** die Mittel zur Verriegelung der gegenseitigen Einschliessposition von zwei Schalen in dem Halter einerseits gebildet wird von zwei Schraubbolzen (11, 12) welche jedesmal einschraubbar sind in einer mit Schraubengewinde versehenen Bolzenöffnung (10) in einer Schale (8,9) und andererseits beide überstehende Mittelbereiche der Schale (8,9) mit Hilfe eines durchgehenden Bolzen (15) mit einer Mutter (16) an einander gekoppelt werden unter gleichzeitiger Einklemmung des Kugelkopfes (13) in der gewünschten Position.

6. Schale gemäss Anspruch 5, **dadurch gekennzeichnet, dass** sich im Mittenbereich des kugelförmigen Teiles (14) der Schale (8,9) eine Öffnung befindet, versehen mit einem Schraubengewinde, zum Eindrehen eines Stellbolzens (18), insbesondere eines Stockschraubens.

7. Kugelkopf zur Anwendung in einer Universalkugelverstellkonstruktion gemäss Ansprüche 1-3, **dadurch gekennzeichnet, dass** der maximale Justierwinkel des Kugelkopfes (13) hinsichtlich der Tragplatte (2) höchstens 25° aus senkrechter Position beträgt (Fig. 1).

## Claims

1. A universal ball adjustment construction for use with the mounting of projectors or this type of apparatus on the wall and/or ceiling, which comprises the combination of flat support plate (2) to be attached to the wall and/or to the ceiling, which is provided centrally with a tube-shaped mounting (4) projecting from the surface of the support plate (2) as well as with a ball locking mechanism comprising two separate, oblong shells (8, 9) and a ball head, whereby with the assistance of a locking element (15, 16), a clamping pressure can be brought up between the two shells, such that the ball head is completely enclosed within the spherical recess of the shells and can be fixed in a previously adjusted position, **characterized in that** the end (7) of each shell (8, 9) facing away from the ball head has an outer diameter over a height, which is smaller than or the same as the height of the tube-shaped mounting, which matchingly corresponds with the inner diameter of the tube-shaped mounting, such that both shells (8, 9), provided with the ball head (13) mounted therebetween, can be inserted with the named end (7) into the tube-shaped mounting (4) and with the assistance of at least a second locking element (11, 12) then can be locked, whereby both shells (8, 9) approximately on the halves between the ends of the mounting (4) and the recess (14) for the ball head (13) are provided with the first locking element (15, 16), with which an additional, counter clamping pressure between the two shells (8, 9) can be brought about, such can a complete enclosure of the ball head (13) within the ball-shaped recess (14) is realized, as well as its previously fixed position.

2. The universal ball adjustment construction according to claim 1, **characterized in that** the ball head (13) is made from cylindrical bar material and the ball head (13) is flattened up to approximately a third of its height in connection to a cylindrical part (22) with an outwardly projecting flange (21).

3. The universal ball adjustment construction according to claim 2, **characterized in that** the cylindrical part (22) can implement a bolt connection (23) with an element shifted over the cylindrical part (22), for example, the tube of a projector mounting, and the flange (22) forms a limitation of this element.

4. A shell, in particular, a hollow shell (8, 9) for use in a universal ball adjustment construction according to one of the preceding claims, **characterized in that** a tube-shaped center part is provided in a one-way direction from an end part (7), whose outer diameter corresponds with the inner diameter of a tube-shaped mounting (4), which, in particular, is welded at a right angle to a support plate (2), such that the tube-shaped mounting (4) and the center part attach onto one another in the same diameter because the shell (8, 9) passes over the other side in a hollow spherical recess (14), which on the interior, has the same shape as the diameter of a ball head (13).

5. The shell according to claim 4, **characterized in that** the center for locking the opposite locking position of two shells in the mounting is formed on one side from two screw bolts (11, 12), which each can be screwed into a bolt opening (10) provided with screw threads in a shell (8, 9) and on the other side, both corresponding center regions of the shells (8, 9). with the assistance of a through bolt (15) . are coupled with a nut (16) to each other with simultaneous engagement of the ball head (13) into the desired position.

6. The shell according to claim 5, **characterized in that** in the center region of the ball-shaped part (14) of the shell (8, 9), an opening is located, provided with a screw threading for turning in of an adjustment bolt (18), in particular, a stock screw.

7. A ball head for use in a universal ball adjustment construction according to claims 1-3, **characterized in that** the maximum adjustment angle of the ball head (13) relative to the support plate (2) amounts to 25° at the most from a perpendicular position (Fig. 1).

## Revendications

1. Structure universelle réglable à sphère à utiliser pour le montage de projecteurs ou d'appareils similaires au mur et/ou au plafond, se composant d'une combinaison d'une plaque d'appui (2) plate à fixer au mur et/ou au plafond, munie en son centre d'un support tubulaire (4) dépassant de la surface de la plaque d'appui (2) ainsi que d'un verrouillage de sphère composé de deux coquilles de forme allongée (8, 9) séparées et d'une tête sphérique, un élément de verrouillage (15, 16) permettant d'exercer une pression de serrage entre les deux coquilles, de sorte que la tête sphérique puisse être entièrement enfermée à l'intérieur de l'évidement sphérique des coquilles et immobilisée dans une position réglée au préalable, **caractérisée en ce que** l'extrémité (7) de chaque coquille (8, 9) située à l'opposé de la tête sphérique possède, sur une hauteur inférieure ou égale à la hauteur du support tubulaire (4), un diamètre extérieur qui est ajusté de manière à correspondre au diamètre intérieur du support tubulaire (4) de sorte que les deux coquilles (8, 9), munies de la tête sphérique (13) montée entre elles, peuvent être introduites par ladite extrémité (7) dans le support tubulaire (4) et ensuite être verrouillées à l'aide d'au moins un second élément de verrouillage (11, 12), les deux coquilles (8, 9) étant munies, environ à mi-distance entre l'extrémité du support (4) et l'évidement (14) pour la tête sphérique (13), du premier élément de verrouillage (15, 16) permettant d'exercer une force de serrage mutuelle supplémentaire entre les deux coquilles (8, 9) de sorte à réaliser un enfermement complet de la tête sphérique (13) dans l'évidement sphérique (14), ainsi que sa position fixée au préalable.

2. Structure universelle réglable à sphère selon la revendication 1, **caractérisée en ce que** la tête sphérique (13) est réalisée dans une barre cylindrique et **en ce que** la tête sphérique (13) présente un méplat jusqu'à environ un tiers de sa hauteur à la suite d'une partie cylindrique (22) avec une collerette dépassante (21).

3. Structure universelle réglable à sphère selon la revendication 2, **caractérisée en ce que** la partie cylindrique (22) peut constituer un assemblage par boulons (23) avec un élément, par exemple le tube d'un support de projecteur, enfilé sur la partie cylindrique (22), et **en ce que** la collerette (21) constitue une limitation de cet élément.

4. Coquille, en particulier une coquille creuse (8, 9) utilisée dans une structure universelle réglable à sphère selon l'une des revendications précédentes, **caractérisée en ce qu'**une partie centrale tubulaire est munie, dans une direction, d'une extrémité (7) dont le diamètre extérieur correspond au diamètre intérieur d'un support tubulaire (4), lequel est en particulier soudé perpendiculairement sur une plaque d'appui (2), de sorte que le support tubulaire (4) et la partie centrale se raccordent sur le même diamètre, car la coquille (8, 9), à son autre extrémité, prend la forme d'un évidement creux sphérique (14) qui a intérieurement la même forme que le diamètre d'une tête sphérique (13).

5. Coquille selon la revendication 4, **caractérisée en ce que** les moyens de verrouillage des positions d'enfermement réciproques de deux coquilles dans le support sont d'une part constitués par deux boulons filetés (11, 12) qui peuvent chacun se visser dans une ouverture de boulon (10), munie d'un taraudage, dans une coquille (8, 9), et, d'autre part, les deux parties centrales de la coquille (8, 9) qui dépassent sont reliées l'une à l'autre à l'aide d'un boulon traversant (15) muni d'un écrou (16), en bloquant en même temps la tête sphérique (13) dans la position souhaitée.

6. Coquille selon la revendication 5, **caractérisée en ce qu'**une ouverture munie d'un taraudage pour le vissage d'un boulon de réglage (18), en particulier d'une vis à double filet, est aménagée dans la zone centrale de la partie sphérique (14) de la coquille (8, 9).

7. Tête sphérique utilisée dans une structure universelle réglable à sphère selon les revendications 1-3, **caractérisée en ce que** l'angle de réglage maximum de la tête sphérique (13) par rapport à la plaque d'appui (2) est au plus de 25° par rapport à la position horizontale (Fig. 1).
